# EUROPÄISCHE PATENTANMELDUNG

(11) **EP 0 774 665 A1**
(43) Veröffentlichungstag der Anmeldung: **21.05.1997**
(21) Anmeldenummer: 96250257.1
(22) Anmeldetag: 12.11.1996
(51) Int. Cl.: G01N 27/84

(54) **Vorrichtung zum Prüfen der Stirnfläche eines langgestreckten Hohlkörpers mittels Magnetpulver-Rissprüfung**

(30) Priorität: 20.11.1995 DE 19544171
(71) Anmelder: MANNESMANN Aktiengesellschaft, 40213 Düsseldorf (DE)
(72) Erfinder: Haacke, Harri, Dipl.-Ing., 40880 Ratingen (DE); Arzt, Norbert, Dipl.-Ing., 41469 Neuss (DE)
(74) Vertreter: Meissner, Peter E., Dipl.-Ing.

(57) **Zusammenfassung**

Die Erfindung betrifft eine Vorrichtung zum Prüfen der Stirnfläche eines langgestreckten Hohlkörpers (1), insbesondere eines Rohres auf im wesentlichen in Umfangsrichtung liegende Fehler mittels einer kontaktlosen und polfreien Magnetpulver-Rißprüfung, mit einem in den Hohlkörper sich erstreckenden Magnetisierungsdorn (3), der außerhalb des Hohlkörpers (1) mit einer die Primärspule eines nichtgeschlossenen Transformators bildenden Wicklung (4) versehen ist, die ihrerseits mit einer Wechselstromquelle (5) verbunden ist, wobei das offene Ende des Hohlkörpers (1) die Sekundärspule des Transformators bildet und der sich geradlinig erstreckende und manuell handhabbare Magnetisierungsdorn (3) im Bereich des Hohlkörpers (1) mit mindestens einem Führungselement (6) versehen ist.

## Beschreibung

Die Erfindung betrifft eine Vorrichtung zum Prüfen der Stirnfläche eines langgestreckten Hohlkörpers, insbesondere eines Rohr auf im wesentlichen in Umfangsrichtung liegende Fehler mittels einer kontaktlosen und polfreien Magnetpulver-Rißprüfung.
Aus dem DE-Prospekt der Fa. Karl Deutsch 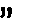 Universelle stationäre Magnetfeld-Rissprüfgeräte 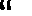 (Seite 2,3;1982) ist ein Verfahren bzw. eine Vorrichtung im vorstehenden Sinne bekannt, bei dem/der in der Sirnfläche ein in Längsrichtung des Hohlkörpers orientiertes magnetisches Feld induziert wird. Die Magnetisierung erfolgt durch einen in das Innere des Prüflings eingeführten Magnetisierungsdorn aus lammelliertem Transformatorblech.
Rohre für den Pipelinebau werden üblicherweise vor dem Versand an die Baustelle mit einer Schweißkante (bevel) versehen. Für die Qualität der späteren Feldschweißung ist es von erheblicher Bedeutung, daß die Stirnfläche und der einige Millimeter dahinterliegende Bereich frei von Fehlern, insbesondere von Dopplungsfehlern ist. Aus diesem Grunde ist es häufig Abnahmevorschrift, daß die Stirnfläche bzw. die angearbeitete Schweißkante jedes Rohres mit einer Magnetpulver-Rißprüfung geprüft werden muß. Bisher war es üblich, dies mit einem Handgerät, d.h. mit einem Joch oder Kontakt-Elektroden durchzuführen und segmentweise den Umfang zu prüfen. Dieses Verfahren ist sehr zeitaufwendig und hat bei Einsatz von Kontakt-Elektroden den Nachteil, daß durch das Aufsetzen der Elektroden Brandstellen entstehen können.

Neben Jochen und transportablen Stromquellen sind auch Geräte mit multidirektionaler Magnetisierung bekannt, mit deren Hilfe Risse aller Richtung an möglichst allen Oberflächenbereichen eines Werkstückes angezeigt werden (s. V. Deutsch, W. Morgner, M. Vogt "Magnetpulver-Rißprüfung", Grundlagen und Praxis, VDI-Verlag GmbH, Düsseldorf, 1993, Seite 98 ff.). Speziell für die Prüfung von Ringen wird dieses Prinzip einer kombinierten Hilfsleitermagnetisierung (Hilfsdurchflutung und Induktionsdurchflutung) angewandt. Dieses Verfahren ist kontaktlos und es können damit Risse an allen Oberflächen, u.a. auch an den Stirnflächen, nachgewiesen werden. Realisiert wird die Induktionsmagnetisierung in der Weise, daß ein aus Trafoblechen hergestellter Magnetisierungskörper in Form eines geschlossenen Rechteckes angebracht wird. Eine Seite dieses Rechteckes erstreckt sich durch den Ring und die gegenüberliegende außerhalb des Werkstückes liegende Seite ist mit einer Wicklung versehen; sie bildet die Primärspule eines geschlossenen Transformators. Ein solches geschlossenes System kann ohne erheblichen Aufwand nicht mehr bei langgestreckten Hohlkörpern angewendet werden, da dann zwei Seiten des Rechteckes mehrere Meter lang sein müßten. Außerdem würde die Verlustleistung erheblich sein.

Aufgabe der Erfindung ist es, eine Vorrichtung zum Prüfen der Stirnfläche eines langgestreckten Hohlkörpers, insbesondere eines Rohr, mittels Magnetpulver-Rißprüfung anzugeben, mit dem unabhängig von der Länge des Hohlkörpers in einfacher Weise und mit hoher Anzeigeempfindlichkeit die Prüfung durchgeführt werden kann.

Diese Aufgabe wird erfindungsgemäß mit den Merkmalen des Anspruchs 1 gelöst.

Zur Handhabung des Magnetisierungsdornes ist dieser im Bereich des Hohlkörpers mit mindestens einem Führungselement versehen. Zweckmäßigerweise sind zwei Führungselemente vorgesehen, wovon eines am Ende des Magnetisierungsdornes angeordnet ist und das zweite im Abstand dazu. Das Führungselement ist scheibenartig ausgebildet und besteht vorzugsweise aus Kunststoff. Der Magnetisierungsdorn selbst besteht aus einem dünnwandigen Rohr, vorzugsweise aus einem austenitischen Stahl hergestellt und ist innen in einfacher Weise mit lackierten Autogen-Schweißdrähten als Weicheisen-Kern gefüllt. Dies erspart die Verwendung teurer Trafobleche. Zur Unterdrückung von Wirbelströmen in dem Rohr ist dieses zweckmäßigerweise mit einem Längsschlitz versehen. Alternativ zum gefüllten Rohr kann auch ein aus Gießharz geformter Dorn verwendet werden. Vor dem Aushärten wird das Gießharz mit Eisenpulver vermischt, wobei volumenmäßig das Eisenpulver 80 % entspricht. Ein solcher Körper ist magnetisierbar, aber elektrisch nicht leitfähig, so daß keine unerwünschten Wirbelströme induziert werden können. Der entscheidende Vorteil dieser Alternativlösung ist darin zu sehen, daß man vor allen Dingen Magnetisierungsdorne mit von der Kreisform abweichenden Querschnitten in einfacher Weise herstellen kann, was ansonsten immer mit erheblichem Aufwand verbunden wäre.

Die Vorrichtung ist einsetzbar für alle langgestreckten Hohlkörper, insbesondere Rohre und je nach Abmessung werden unterschiedlich große Magnetisierungsdorne mit unterschiedlicher Wicklungsanzahl eingesetzt. Als Faustformel gilt dabei, daß der Durchmesser des Magnetisierungsdornes in cm ausgedrückt der zweiten Wurzel des Durchmessers des zu prüfenden Rohres in cm entspricht. Versuche haben gezeigt, daß auch größere Wanddicken bis zu 70 mm und mehr ohne Probleme geprüft werden können.

Der Vorteil der vorgeschlagenen Vorrichtung ist darin zu sehen, daß man bis zu mittleren Abmessungen diese in einfacher Weise manuell handhaben und mit einer Magnetisierung die gesamte Stirnfläche bzw. die Schweißkante prüfen kann. Bei größeren Abmessungen empfiehlt es sich aus Gewichtsgründen einen kleinen Hebekran zur Unterstützung einzusetzen.

Wie eingangs schon erwähnt, klingt die Feldstärke des Magnetfeldes asymptotisch in das Innere des Hohlkörpers ab. Trotzdem kann dieses abgeschwächte Feld noch dazu benutzt werden, den Innen- und Außenbereich des Hohlkörpers auf eine Tiefe von etwa 100 mm auf Querfehler zu prüfen.

In der Zeichnung wird anhand eines Ausführungsbeispiels die erfindungsgemäße Vorrichtung näher erläutert. Es zeigen
- Figur 1: im Längsschnitt eine erfindungsgemäße Vorrichtung zur Magnetpulver-Rißprüfung der Schweißkante eines Rohres,
- Figur 2: das Verfahrensprinzip.

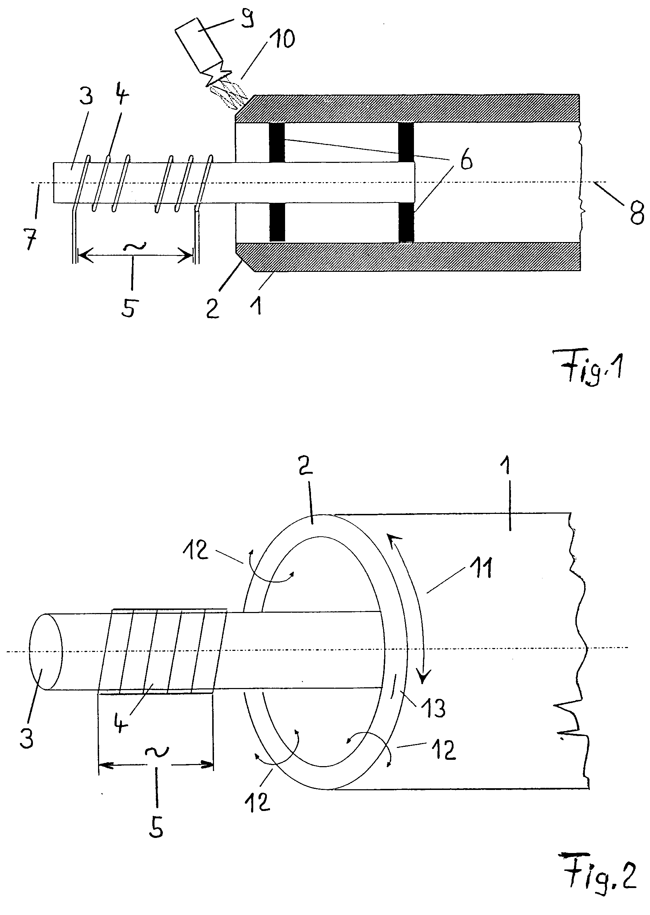

In Figur 1 ist in einem Längsschnitt eine erfindungsgemäße Vorrichtung zur Magnetpulver-Rißprüfung der Schweißkante 2 eines Rohres 1 dargestellt. Statt eines Rohres könnte die Stirnfläche auch eines jeden beliebigen langgestreckten Hohlkörpers mit dieser Vorrichtung geprüft werden. Die Vorrichtung besteht aus einem Magnetisierungsdorn 3, der vorzugsweise aus einem dünnwandigen Rohr aus austenitischem Stahl besteht und innen mit Weicheisen-Drähten (hier nicht dargestellt) gefüllt ist. Der außerhalb des Rohres 1 liegende Abschnitt des Magnetisierungsdornes 3 ist mit einer Wicklung 4 versehen, die an eine Wechselstromquelle 5 angeschlossen ist. Die Wicklung 4 besteht aus entsprechend dimensionierten Kupferkabel. Zur Magnetisierung sind abhängig vom Prüflingsdurchmesser bis zu 4000 AW (Ampere x Windungszahl) erforderlich. Der im Rohr 1 innenliegende Abschnitt des Magnetisierungsdornes 3 ist mit zwei scheibenartig ausgebildeten Führungselementen 6 versehen, wovon das eine am Ende und das andere im Abstand dazu angeordnet ist. Durch diese Führungselemente 6 wird der Magnetisierungsdorn 3 zentriert, so daß im Idealfall die Achse 7 des Magnetisierungsdornes 3 mit der Rohrachse 8 zusammenfällt. Diese Zentrierung ist erforderlich, damit möglichst gleichmäßig die Schweißkantenfläche 2 magnetisiert wird und in jedem Flächenelement etwa eine gleichgroße Feldstärke vorliegt. Während der Magnetisierung wird in bekannter Weise die Schweißkante 2 besprüht, hier angedeutet durch eine Flasche 9, aus der das Prüfmittel 10 auf die Fläche 2 aufgegeben wird. Nach der vollständigen Besprühung der Fläche 2 schließt sich eine Nachmagnetisierung von etwa zwei Sekunden an.

Figur 2 zeigt das Verfahrensprinzip, wobei für gleiche Teile gleiche Bezugszeichen verwendet worden sind. Die auf dem Magnetisierungsdorn 3 aufgebrachte Wicklung 4 stellt die Primärspule und das offene Ende des Rohres 1 die Sekundärspule eines nicht geschlossenen Transformators dar. Der durch den Wechselstrom der Wicklung 4 erzeugte Magnetfluß induziert im Stirnflächenbereich des Rohres 1 einen Strom 11 in Umfangsrichtung, hier kenntlich gemacht durch einen Umfangspfeil. Dieser wiederum erzeugt ein Magnetfeld 12 quer zum Verlauf des induzierten Stromes, hier durch entsprechende Pfeile sichtbar gemacht. Da wie bekannt, die Anzeigenempfindlichkeit besonders hoch ist, wenn die Magnetfeldrichtung senkrecht zur Fehlerrichtung steht, ist es erklärlich, daß der in der Figur symbolisch eingetragene in Umfangsrichtung liegende Fehler 13 besonders deutlich angezeigt wird.

## Patentansprüche

1. Vorrichtung zum Prüfen der Stirnfläche eines langgestreckten Hohlkörpers (1), insbesondere eines Rohres auf im wesentlichen in Umfangsrichtung liegende Fehler mittels einer kontaktlosen und polfreien Magnetpulver-Rißprüfung, mit einem in den Hohlkörper sich erstreckenden Magnetisierungsdorn (3), der außerhalb des Hohlkörpers (1) mit einer die Primärspule eines nichtgeschlossenen Transformators bildenden Wicklung versehen ist, die ihrerseits mit einer Wechselstromquelle verbunden ist, wobei das offene Ende des Hohlkörpers (1) die Sekundärspule des Transformators bildet und der sich geradlinig erstreckende und manuell handhabbare Magnetisierungsdorn (3) im Bereich des Hohlkörpers (1) mit mindestens einem Führungselement (6) versehen ist.

2. Vorrichtung nach Anspruch 1,
dadurch gekennzeichnet,
daß das Führungselement (6) scheibenartig ausgebildet ist und ein Führungselement (6) am Ende des Magnetisierungsdornes (3) und ein zweites Führungselement (6) im Abstand dazu angeordnet ist.

3. Vorrichtung nach Anspruch 1,
dadurch gekennzeichnet,
daß der Magnetisierungsdorn (3) ein dünnwandiges, aus einem austenitischen Stahl hergestelltes Rohr ist, das innen mit lackierten Weicheisen-Drähten gefüllt ist.

4. Vorrichtung nach Anspruch 3,
dadurch gekennzeichnet,
daß das den Magnetisierungsdorn (3) bildende Rohr mit einem Längsschlitz versehen ist.

5. Vorrichtung nach den Ansprüchen 3 und 4,
dadurch gekennzeichnet,
daß als Weicheisen-Drähte Autogen-Schweißdrähte verwendet werden.

6. Vorrichtung nach Anspruch 1,
dadurch gekennzeichnet,
daß der Magnetisierungsdorn (3) ein mit Eisenpulver versetztes und ausgehärtetes Gießharz-Formteil ist.
